# FASCICULE DE BREVET EUROPEEN

(11) **EP 2 038 065 B1**
(45) Date de publication et mention de la délivrance du brevet: **09.12.2009**
(21) Numéro de dépôt: 07823272.5
(22) Date de dépôt: 10.07.2007
(51) Int. Cl.: B02C 18/36, A22C 7/00

(54) **GRILLE DE HACHOIR**
LOCHSCHEIBE FÜR EINEN FLEISCHWOLF
GRATING FOR MINCER

(30) Priorité: 11.07.2006 FR 0606341
(43) Date de publication de la demande: 25.03.2009
(73) Titulaire: Stork Food Systems France, 56150 Baud (FR)
(72) Inventeur: LE PAIH, Jacques, F-56930 Plumeliau (FR)
(74) Mandataire: Hays, Bertrand
(86) Numéro de dépôt international: PCT/FR2007/001179
(87) Numéro de publication internationale: WO 2008/006972

(56) Documents cités:
- EP-A- 1 652 584
- DE-U- 1 709 680
- FR-A1- 2 718 612
- RU-C1- 2 031 722

## Description

La présente invention concerne une grille de hachoir et un dispositif de fabrication de portions de viande hachée comprenant un hachoir équipé d'une telle grille.

Il est connu notamment par le document brevet FR 2 718 612 des dispositifs pour la fabrication de steaks hachés comprenant un hachoir pour débiter un boudin ou veine de viande hachée, des moyens de convoyage pour transporter ladite veine de viande hachée en sortie dudit hachoir, et le long desdits moyens de convoyage, des moyens pour découper ladite veine de viande hachée en portions. Le hachoir est classiquement équipé d'une grille généralement de forme circulaire, avec des trous ou perforations droits, ayant leurs axes orientés parallèlement à l'axe central de la grille. Les troues sont disposés en rangées superposées sur une zone rectangulaire de la grille pour délimiter une forme de veine de dimension et volume déterminés en fonction des steaks à obtenir. Les fils ou filaments de viande extrudés en sortie de grille se présentent sous la forme de nappes superposées correspondant aux rangées de trous droits.

Les steaks hachés formés à partir d'une telle veine peuvent avoir tendance avant et/ou après cuisson à se défaire, notamment lorsqu'on cherche à minimiser les forces appliquées sur la veine pour la mise en forme des steaks.

En sortie les filaments sont disposés parallèlement les uns aux autres dans le sens d'avancement de la veine. Les morceaux ou fibres de viande constituant la veine sont alors. également sensiblement tous orientés dans le même sens. Lors de la cuisson, les fibres de viandes se rétractent principalement dans une seule direction ce qui entraîne une déformation du steak.

Par ailleurs, pour ne pas avoir une veine de fils droits parallèles et obtenir un meilleur aspect final du produit, la veine de viande est classiquement débitée sur un convoyeur entraîné à une vitesse inférieure de celle du débit de viande en sortie de grille, de sorte que les nappes de fils arrivant sur le convoyeur se plissent et forment des ondulations. Ces ondulations sont irrégulières et sont plus ou moins inclinées dans la direction d'avancement du convoyeur ou dans la direction inverse. Bien qu'un débit sensiblement constant de viande hachée puisse être obtenu en sortie de hachoir, la quantité de viande hachée le long de la veine peut varier en raison de ces ondulations irrégulières des nappes. Les poids des portions mises en forme à partir d'une telle veine de viande peuvent donc varier de manière importante par rapport au poids moyen visé. Pour leur commercialisation, il est nécessaire de garantir un poids unitaire sensiblement constant correspondant au poids annoncé. Le fabricant est alors obligé d'augmenter le poids moyen visé pour être sûr d'atteindre le poids annoncé, ce qui entraîne des pertes importantes de produits pour le fabricant.

Le but de la présente invention est de proposer une solution visant à pallier les inconvénients précités.

A cet effet, la présente invention a pour objet une grille perforée de hachoir selon la revendication 1.

La grille selon l'invention comprend des trous obliqués dont les axes ont des orientations différentes. La veine de viande en sortie d'une telle grille est formée d'une masse de viande plus compacte présentant une meilleure tenue. La veine de viande ne se plisse plus de manière aléatoire comme dans l'art antérieur, permettant ainsi un portionement à poids sensiblement constant. Dans le cas d'un hachoir débitant une veine de viande à une vitesse supérieure de celle du convoyeur sur lequel ladite veine de viande est déposée, la veine de viande compacte a tendance à s'expanser de manière homogène dans toutes les directions.

Selon une particularité, la grille comprend au moins des trous dont les axes ont des orientations différentes en projection horizontale, de préférence des orientations opposées en projection horizontale, de sorte que les fils de viandes ne soient plus tous orientés dans le sens longitudinal de la veine de viande.

Selon une particularité, les trous sont disposés en rangées horizontales superposées, pour former par exemple une veine de section transversale sensiblement rectangulaire, les axes de trous de deux rangées successives ayant des orientations différentes en projection verticale et/ou horizontale, et/ou les axes de trous d'une même rangée ayant des orientations différentes en projection verticale et/ou horizontale. Avantageusement, les trous de deux rangées successives sont disposés en quinconce.

Selon des modes de réalisations, la grille présente une épaisseur de 8 à 20 mm, et/ou comprend de 50 à 200 trous, et/ou comprend des trous de section transversale circulaire, ayant un diamètre compris entre 2 et 7 mm.

L'invention a également pour objet un dispositif de fabrication de portions de viande hachée, comprenant un hachoir pour débiter une veine de viande hachée, laquelle veine de viande hachée a une grosseur déterminée en fonction des portions à réaliser, des moyens de convoyage à bande sans fin pour transporter ladite veine de viande hachée en sortie dudit hachoir, et le long desdits moyens de convoyage, des moyens pour découper ladite veine de viande hachée en portions, le dispositif étant **caractérisé en ce que** ledit hachoir est équipé d'une grille telle que définie précédemment.

Selon une particularité, pour la fabrication de portions de viandes mises en forme telles que des steaks hachés, le dispositif comprend en outre, le long desdits moyens de convoyage, des moyens de formage agissant sur ladite veine de viande hachée pour la mise en forme des portions, en particulier des moyens de formage latéraux agissant simultanément de chaque côté de ladite veine de viande hachée pour former le contour desdites portions, et des moyens de formage verticaux coopérant avec lesdits moyens de formage latéraux pour conférer aux portions l'épaisseur souhaitée.

L'invention sera mieux comprise, et d'autres buts, détails, caractéristiques et avantages apparaîtront plus clairement au cours de la description explicative détaillée qui va suivre de mode de réalisation particulière actuellement préférée de l'invention, en référence aux dessins schématiques annexés, sur lesquels
- la figure 1 représente une vue de face d'une grille selon un premier mode de réalisation de l'invention ;
- les figures 2A, 2B et 2C représentent respectivement des vues agrandies selon les plans de coupe IIA-IIA, IIB-IIB, et IIC-IIC de la figure 1 ;
- la figure 3 représente une vue de face d'une grille selon un deuxième mode de réalisation de l'invention ;
- la figure 4A représente une vue selon le plan de coupe IVA-IVA ;
- la figure 4B est une vue agrandie du détail D de la figure 4A ;
- la figure 5 représente une vue de face d'une grille selon un troisième mode de réalisation, sur laquelle quelques filaments de viande extrudés par des trous sont illustrés de manière schématique ;
- les figures 6A, 6B et 6C représentent respectivement des vues agrandies selon les plans de coupe VIA-VIA, VIB-VIB, et VIC-VIC de la figure 5 ;
- la figure 7 représente une vue en perspective de la grille de la figure 5; et,
- la figure 8 est une vue schématique de côté d'un dispositif de fabrication de steaks hachés, comprenant un hachoir équipé d'une grille selon l'invention.

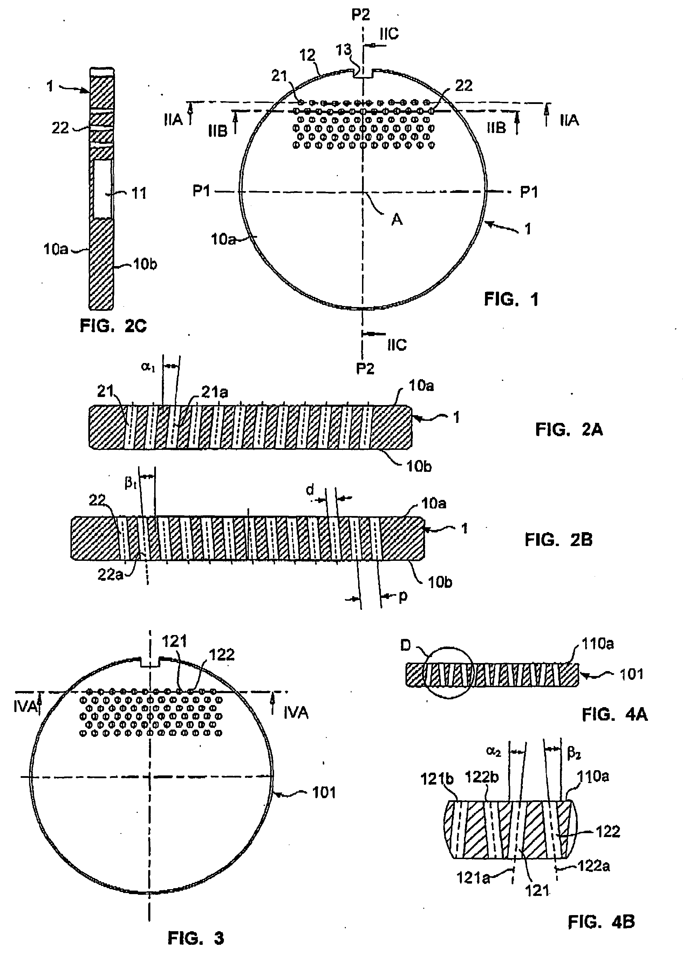

En référence aux figures 1 et 2C, la grille 1 est formée d'un disque d'axe principal A1, muni de trous traversants débouchant sur chaque face principale 10a, 10b du disque. La grille est destinée à être montée de manière classique sur un hachoir notamment pour l'extrusion de filaments de viande hachée. La face principale dite arrière 10b, par laquelle ladite grille est destinée à venir contre le hachoir, présente un alésage axial 11 pour recevoir l'extrémité de l'arbre portant les couteaux du hachoir. La grille présente sur son pourtour 12 une encoche supérieure 13 pour son blocage en rotation sur le hachoir.

Les trous 21, 22 sont disposés selon des rangées horizontales superposées, les trous de deux rangées successives superposées étant disposés en quinconce. Tel qu'illustré sur la figure 1, la grille comprend une alternance de premières rangées de trous 21, dont les axes sont orientés vers la droite, et de secondes rangées de trous 22 dont les axes sont orientés vers la gauche.

En référence à la figure 2A, les axes 21a des trous 21 d'une première rangée sont parallèles entre eux et forme un angle α₁ non nul par rapport à la normale au plan de la grille. En référence à la figure 2B, les axes 22a des trous 22 d'une seconde rangée sont parallèles entre eux et forment un angle β₁ non nul par rapport à la normale, l'angle étant β₁ opposés à l'angle α₁, de sorte que β₁ = -α₁. Les axes des trous présentent donc en projection horizontale, par exemple selon le plan P1, des orientations différentes d'une rangée à l'autre, les axes des trous ayant en projection verticale, selon le plan P2, des orientation identiques parallèles à l'axe principal, tel que visible sur la figure 2C.

A titre d'exemple, la grille a une épaisseur d'environ 12,5 mm, un diamètre d'environ 130 mm. L'angle α₁ est par exemple de 5°. Les trous des différentes rangées ont des sections circulaires identiques, par exemple de diamètre d de 3 mm. Les pas d'écartement p entre les trous 21, 22 sont identiques d'une rangée à l'autre, par exemple de 6 mm.

La grille permet de former en sortie une veine de viande hachée formée de nappes de fils superposées parallèles entre elles, avec une alternance de nappes comprenant des fils parallèles entre eux et orientés vers la gauche et de nappe de fils parallèles entre eux et orientés vers la droite.

Dans le présent mode de réalisation les trous sont disposés uniquement dans la moitié supérieur de la grille, entre l'axe principal A et l'alésage 11 selon 6 rangées. Cette grille est plus particulièrement destinée à la fabrication de steaks hachés, pour lesquels on évite d'extruder la viande par des trous disposés en dessous de l'axe des couteaux afin de garantir un débit constant.

Dans une variante de réalisation, la grille comprend une alternance de premières rangées comprenant des trous orientés vers le haut, et de secondes rangées de trous orientés vers le bas, les axes des trous présentent donc en projection verticale, des orientations différentes d'une rangée à l'autre, et sont tous orientés parallèlement à la normale de la grille en projection horizontale.

Dans le mode de réalisation illustré aux figures 3, 4A et 4B, la grille 101 comprend des trous 121, 122 disposés en quinconce selon des rangées horizontales identiques superposées. Chaque rangée est formée d'une succession de paire de trous 121, 122, chaque paire comprenant un premier trou 121 dont l'axe 121a est orienté vers la droite et forme un angle α₂ avec la normale au plan de la grille, et un deuxième trou 122 dont l'axe 122a est orienté vers la gauche et forme un angle β₂ par rapport à la normale, de sorte que les deux filaments extrudés par les trous d'une paire convergent l'un vers l'autre. Les orifices de sortie 121b, 122b des trous en face principale avant 110a de la grille sont disposés à intervalle régulier, le pas d'écartement entre les orifices étant par exemple de 6 mm comme précédemment.

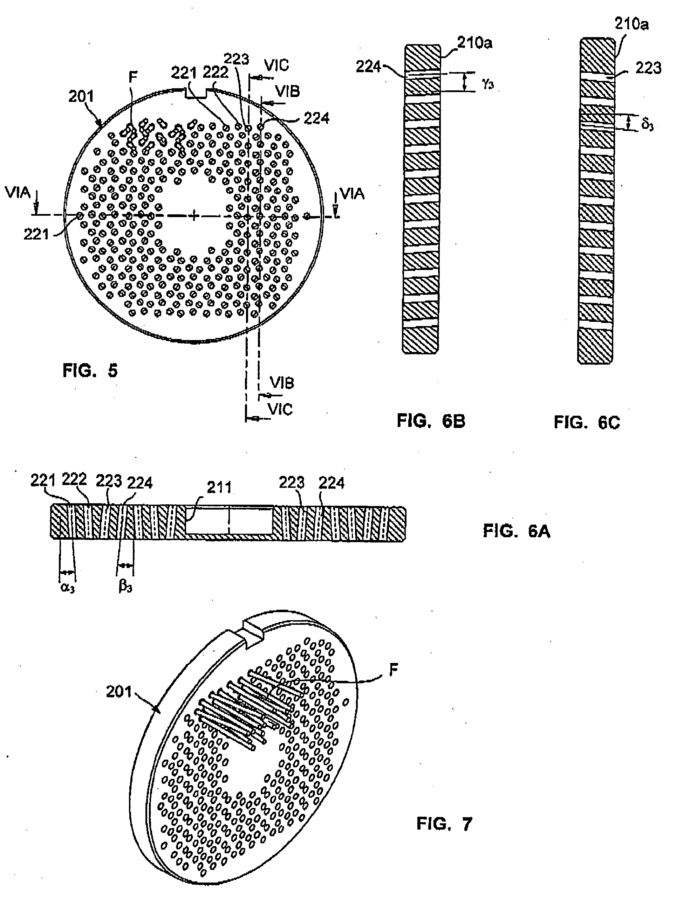

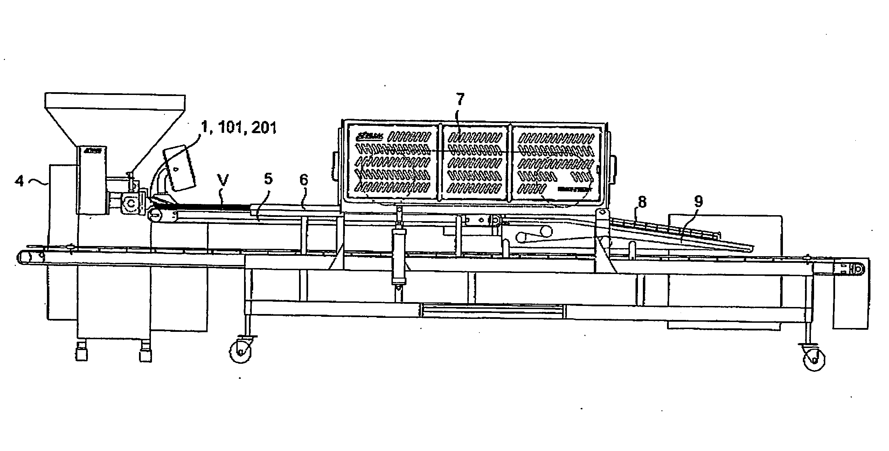

Les figures 5, 6A-C et 7 illustrent un troisième mode de réalisation dans lequel, la grille comprend des rangées horizontales de trous superposées, chaque rangée comprenant des séries de quatre types de trous différents 221-224. En référence à la figure 6A, le premier trou 221 et le deuxième trou 222 ont leur axe orienté vers la droite, d'un angle α₃ par rapport à la normale en projection horizontale, et les troisième et quatrième trous 223 et 224 ont leur axe orienté vers la gauche en projection horizontale d'un angle β₃ égal à -α₃.

En référence à la figure 6B, les axes des quatrièmes trous 224 sont orientés vers le haut d'un angle γ₃ en projection verticale. Les axes des deuxièmes trous sont également orientés d'un même angle γ₃ vers le haut en projection verticale.

En référence à la figure 6C, les axes des troisièmes trous 223 sont orientés vers le bas d'un angle δ₃ en projection verticale. Les axes des deuxièmes trous sont également orientés vers le haut d'un angle δ₃ en projection verticale.

Ainsi, vu de la face avant 210a, tel qu'illustré sur la figure 1, chaque série de trous d'une rangée comprend successivement de gauche à droite, un premier trou 221 orienté vers le bas et vers la droite, un deuxième trou 222 orienté vers le haut et vers la droite, un troisième trou 223 orienté vers la gauche et vers le bas et un quatrième trou 224 orienté vers la gauche et vers le haut.

La grille 201 comprend une alternance verticale de premières rangées horizontales et de secondes rangées horizontales, les trous de même type des premières rangées étant alignés verticalement, les secondes rangées ayant également leurs trous de même type alignés verticalement. Les trous des premières rangées et des secondes rangées sont décalés de sorte que les alignements verticaux des premier trous 221 des secondes rangées soient disposés entre les alignements verticaux de troisièmes trous 223 et de quatrièmes trous 224 des premières rangées.

Dans ce mode de réalisation, les rangées de trous s'étendent autour de l'alésage central 211 sur la moitié supérieure et la moitié inférieure de la grille. La figure 7 illustre de manière schématique l'imbrication des fils de viandes F obtenue en sortie d'une telle grille.

La figure 8 représente un dispositif de fabrication de steaks hachés, comprenant un hachoir 4 équipé d'une grille 1, 101, 201 selon l'invention, pour débiter une veine V sur le brin supérieur d'un premier convoyeur à bande sans fin 5. Avantageusement, le débit de viande en sortie de grille est légèrement supérieur à la vitesse d'avancement du premier convoyeur. Le dispositif comprend le long de ce premier convoyeur un système 6 de découpe de la veine en portions, puis un système 7 de formage desdites portions, en aval duquel les portions mises en forme sont transférées dans des barquettes de conditionnement 8 défilant sur un deuxième convoyeur à bande sans fin 9. A titre d'exemple, le dispositif comprend les systèmes de découpe et de mise en forme décrits dans le document brevet FR 2 826 237.

## Revendications

1. Grille perforée de hachoir comportant une pluralité de trous d'extrusion pour former une veine de viande hachée destinée à la fabrication de portions de viande hachée, notamment de portions mises en forme telles que des steaks hachés, **caractérisée en ce que** les trous sont disposés en rangées horizontales superposées, les axes (21a, 22a ; 121a, 122a) de trous (21, 22 ; .121, 122 ; 221, 222, 223, 224) d'une même rangée et/ou de deux rangées successives ayant des orientations opposées en projection horizontale, de sorte que les fils de viandes (F) extrudés par lesdits trous s'intriquent entre eux.

2. Grille selon la revendication 1, **caractérisée en ce que** les axes des trous de deux rangées successives ont des orientations opposées en projection horizontale.

3. Grille selon la revendication 1, **caractérisée en ce que** chaque rangée comprend des paires de trous dont les axes ont des orientations opposées en projection horizontale.

4. Grille selon la revendication 1, **caractérisée en ce qu'**elle comprend des trous d'une même rangée et/ou de deux rangées successives dont les axes ont des orientations opposées en projection horizontale et en projection verticale.

5. Grille selon l'une des revendications 1 à 4, **caractérisée en ce que** les trous de deux rangées successives sont disposés en quinconce.

6. Grille selon l'une des revendications 1 à 5, **caractérisée en ce qu'**elle présente une épaisseur de 8 à 20 mm.

7. Grille selon l'une des revendications 1 à 6, **caractérisée en ce qu'**elle comprend de 50 à 200 trous.

8. Grille selon l'une des revendications 1 à 7, **caractérisée en ce qu'**elle comprend des trous de section transversale circulaire, ayant un diamètre compris entre 2 et 7 mm.

9. Dispositif de fabrication de portions de viande hachée, comprenant un hachoir pour débiter une veine de viande hachée, des moyens de convoyage à bande sans fin pour transporter ladite veine de viande hachée en sortie dudit hachoir, et le long desdits moyens de convoyage, des moyens pour découper ladite veine de viande hachée en portions, **caractérisé en ce que** ledit hachoir est équipé d'une grille de sortie selon l'une des revendications 1 à 8.

10. Dispositif selon la revendication 9 pour la fabrication de portions de viandes mises en forme telles que des steaks hachés, **caractérisé en ce qu'**il comprend en outre, le long desdits moyens de convoyage (5), des moyens de formage (7) agissant sur ladite veine de viande hachée (V) pour la mise en forme des portions.

## Claims

1. Perforated grating of a mincer comprising a plurality of extrusion holes for forming a stream of minced meat intended for preparing portions of minced meat, particularly shaped portions such as minced meat steaks, **characterized in that** the holes are arranged in superimposed horizontal rows, the axes (21a, 22a; 121a, 122a) of holes (21, 22; 121, 122; 221, 222, 223, 224) of a same row and/or of two successive rows having opposite orientations in horizontal projection, such that the strings (F) of meat extruded through said holes intertwine.

2. The grating according to claim 1, **characterized in that** the axes of holes of two successive rows have opposite orientations in horizontal projection.

3. The grating according to claim 1, **characterized in that** each row comprises pairs of holes whose axes have opposite orientations in horizontal projection.

4. The grating according to claim 1, **characterized in that** it comprises holes of a same row and/or two successive rows whose axes have opposite orientations in horizontal projection and vertical projection.

5. The grating according to one of claims 1 to 4, **characterized in that** the holes of two successive rows are arranged in staggered rows.

6. The grating according to one of claims 1 to 5, **characterized in that** it exhibits a thickness of 8 to 20 mm.

7. The grating according to one of claims 1 to 6, **characterized in that** it comprises from 50 to 200 holes.

8. The grating according to one of claims 1 to 7, **characterized in that** it comprises holes of circular cross-section, having a diameter comprised between 2 and 7 mm.

9. A device for preparing portions of minced meat, comprising a mincer for outputting a stream of minced meat, endless belt conveyor means for transporting said stream of minced meat at the output of said mincer, and along said conveyor means, means for cutting said stream of minced meat into portions, **characterized in that** said mincer is equipped with an output grating according to one of claims 1 to 8.

10. The device according to claim 9 for preparing shaped portions of meat such as minced meat steaks, **characterized in that** it further comprises, along said conveyor means (5), shaping means (7) acting on said stream (V) of minced meat for shaping the portions.

## Patentansprüche

1. Lochscheibe für einen Fleischwolf mit einer Mehrzahl von Extrusionslöchern zum Bilden eines Hackfleischstrangs, der zum Herstellen von Hackfleischportionen, insbesondere von in Form gebrachten Portionen, wie etwa Hackfleischsteaks, bestimmt ist, **dadurch gekennzeichnet, dass** die Löcher in übereinander liegenden waagrecht verlaufenden Reihen angeordnet sind, wobei die Achsen (21a, 22a; 121a, 122a) der Löcher (21, 22; 121, 122; 221, 222, 223, 224) einer gleichen Reihe und/oder von zwei aufeinanderfolgenden Reihen in Horizontalprojektion entgegengesetzt ausgerichtet sind, so dass die durch die Löcher extrudierten Fleischfäden (F) sich miteinander verflechten.

2. Lochscheibe nach Anspruch 1, **dadurch gekennzeichnet, dass** die Achsen der Löcher zweier aufeinanderfolgender Reihen in Horizontalprojektion entgegengesetzt ausgerichtet sind.

3. Lochscheibe nach Anspruch 1, **dadurch gekennzeichnet, dass** jede Reihe Lochpaare aufweist, deren Achsen in Horizontalprojektion entgegengesetzt ausgerichtet sind.

4. Lochscheibe nach Anspruch 1, **dadurch gekennzeichnet, dass** sie Löcher einer gleichen Reihe und/oder zweier aufeinanderfolgender Reihen enthält, deren Achsen in Horizontalprojektion und in Vertikalprojektion entgegengesetzt ausgerichtet sind.

5. Lochscheibe nach einem der Ansprüche 1 bis 4, **dadurch gekennzeichnet, dass** die Löcher zweier aufeinanderfolgender Reihe auf Lücke angeordnet sind.

6. Lochscheibe nach einem der Ansprüche 1 bis 5, **dadurch gekennzeichnet, dass** sie eine Dicke von 8 bis 20 mm aufweist.

7. Lochscheibe nach einem der Ansprüche 1 bis 6, **dadurch gekennzeichnet, dass** sie 50 bis 200 Löcher aufweist.

8. Lochscheibe nach einem der Ansprüche 1 bis 7, **dadurch gekennzeichnet, dass** sie Löcher mit kreisrundem Querschnitt mit einem Durchmesser zwischen 2 und 7 mm aufweist.

9. Vorrichtung zum Herstellen von Hackfleischportionen mit einem Fleischwolf zum Ausgeben eines Hackfleischstrangs, Mitteln mit Endlosband zum Abtransportieren des Hackfleischstrangs am Austritt des Fleischwolfs und mit entlang der Fördermittel befindlichen Mitteln zum Zuschneiden des Hackfleischstrangs in Portionen, **dadurch gekennzeichnet, dass** der Fleischwolf mit einer Austrittslochscheibe nach einem der Ansprüche 1 bis 8 ausgestattet ist.

10. Vorrichtung nach Anspruch 9 zum Herstellen von in Form gebrachten Hackfleischportionen, wie etwa Hackfleischsteaks, **dadurch gekennzeichnet, dass** sie ferner entlang der Fördermittel (5) befindliche Formungsmittel (7) aufweist, die zur Formgebung der Portionen auf den Hackfleischstrang (V) einwirken.
